# EUROPEAN PATENT APPLICATION

(11) **EP 0 559 381 A1**
(43) Date of publication of application: **08.09.1993**
(21) Application number: 93301431.8
(22) Date of filing: 25.02.1993
(51) Int. Cl.: F16B 25/00

(54) **Concrete fastener**

(30) Priority: 02.03.1992 US 844201
(71) Applicant: ILLINOIS TOOL WORKS INC., Glenview, Illinois 60025-5811 (US)
(72) Inventor: Wieder, Alicia, Willowbrook, Illinois (US); Tenuta, Ralph D., Mount Prospect, Illinois (US); Nilsen, Martin J., Hampshire, Illinois (US)
(74) Representative: Rackham, Stephen Neil

(57) **Abstract**

A fastener (10) for securing directly to a bore (34) in concrete or masonry (36) without the use of plugs or anchors includes a shank (12), a head (14) at one end and a point (16) at the other end. It also includes a first screw thread (30) extending from the point (16) towards the head (14) and a second screw thread (32) of smaller diameter extending from the point (16) part of the length of the first screw thread. The second screw thread (32) stabilises and centres the fastener as it taps its way into the side wall of the bore (34) and the absence of the second screw thread (32) accommodates particulate material removed during the self-tapping operation to facilitate driving of the fastener (10).

## Description

The present invention relates generally to an improved fastener useful for attaching objects to a structure composed of a solid, hard material, such as concrete or masonry. More specifically, the invention relates to an improved construction of a concrete or masonry fastener, which is significant improvement over the construction disclosed in U.S. Patent No. 3,937,119 and British Patent No. 1,510,686.

Various constructions of fasteners adapted for different purposes are quite well known in the relevant art, as is evident, for example, by the following U.S. Patents:-

| | |
|---|---|
| Siebol et al | 3,739,682 |
| Laverty | 3,861,269 |
| Yotti | 3,902,399 |
| Shimizu et al | 4,241,638 |
| Shimizu et al | 4,329,099 |
| Barth et al | 4,576,534 |
| Brandt | 4,655,661 |
| Kawashita | 4,874,278. |

British Patent No. 1,510,686 describes and claims an anchor device for insertion and retention in a bore of a pre-determined diameter formed in a masonry type support surface, the device comprising a shank extending from an entering extremity to a trailing extremity, with an enlarged head portion at the trailing extremity, the head portion including rotation inducing surfaces, a helical thread formed on the shank and providing a first plurality of convolutions extending along the shank, helical guide means formed on the shank as a second plurality of convolutions extending along the shank, the crest of the guide means being at a substantially uniform radial distance from the longitudinal axis of the shank, the convolutions of the guide means being positioned between adjacent convolutions of the thread, the radial dimensions from the axis of the shank to the crest of the helical thread being of uniformly decreasing magnitude from near the trailing extremity to near the entering extremity of the shank, but all greater than the said uniform radial distance from the axis of the shank to the crest of the guide means, notches formed in the crest of the helical thread on at least a plurality of the first convolutions adjacent to the entering extremity of the shank, the notches enabling the crest of the helical thread to become firmly embedded in the side wall of the bore as the device is rotated about the longitudinal axis by chipping the side wall of the bore to an increasing depth as the helical thread progresses into the bore, the adjacent first and second convolutions being spaced from each other along the shank, thereby providing a reservoir to receive and retain the masonry material removed from the side wall of the bore due to the embedding of the crest portions of the helical thread therein.

According to this invention, a fastener for tapping into an opening defined in concrete or masonry includes a shank having a head at one end and a point at the other end, a first screw thread of uniform pitch extending along the shank from adjacent the point towards the head, a second screw thread on the shank from adjacent the point along only a portion of the full extent of the first screw thread, and the second screw thread being of a diameter less than that of the first screw thread, a first stage of the fastener including the second thread enabling self-tapping of the fastener into the opening in the concrete, a second stage of the fastener where the second thread is absent enabling particulate dislodged in the self-tapping process to be held and retained as the fastener is driven further into engagement with the opening.

It appears that the combination of a two stage thread construction in which the first stage provides stability during the initial thread cutting stage of the leading part of the fastener and the second stage from which the second thread is absent provides space for concrete particles dislodged as the fastener taps into it, provides a better and more easily driven fastener than that described in British Patent No. 1,510,686.

A particular embodiment of a fastener in accordance with this invention will now be described with reference to the accompanying drawing, in which:-

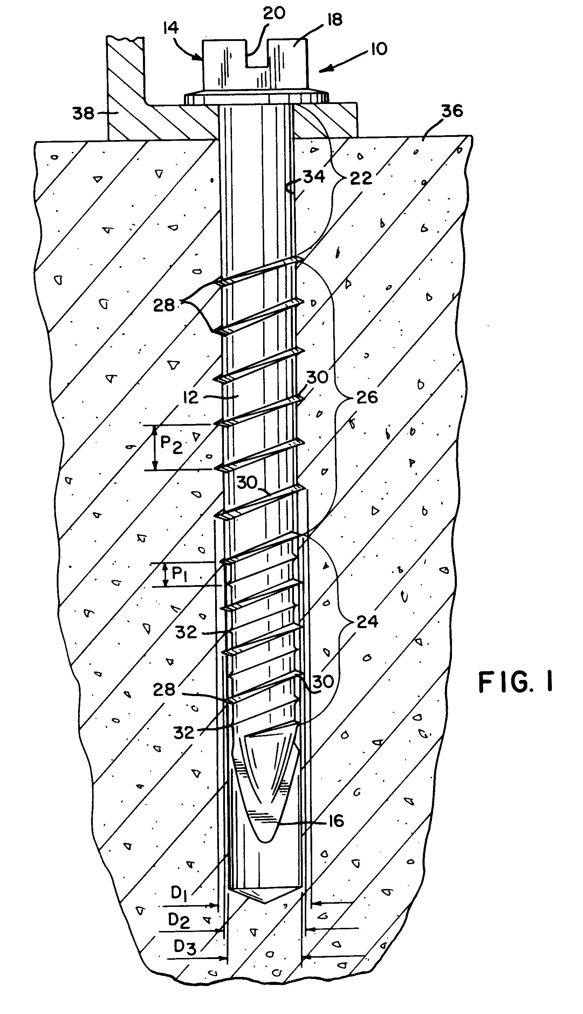

Figure 1 is a side elevation.

As shown in Figure 1, the fastener 10 of the invention includes a generally cylindrical shank 12 having a driving head 14 on one end and en entering point 16 on the other end. The head 14 includes driving surfaces 18 for driving engagement by a wrench and a transverse slot 20 for receiving a screwdriver. The point 16 of the fastener may be configured as a so called "X-point" of known construction as shown for example in U.S. Patent No. 4,693,654.

The shank 12 of the fastener includes a smooth unthreaded portion 22 extending from adjacent the head 14 some distance along the shank. The fastener further includes a threaded portion consisting of a first stage 24 and a second stage 26 disposed successively along the shank between the point 16 and unthreaded portion 22. The details of the first and second threaded stages will now be described.

A first thread 28 is disposed on the shank from adjacent to point 16 continuously to the unthreaded shank portion 22. It will thus be seen that the thread 28 extends along both the first and second stages 24 and 26. The thread 28 gradually increases in diameter as the thread extends from the point 16 toward the portion 22 and is of constant pitch along its length.

The thread 28 is preferably sharp-crested as shown and includes a plurality of cutting notches 30 defined therein at spaced intervals along the thread.

The fastener includes a second thread 32 disposed along the shank from adjacent to point 16 and terminates near the mid-point of the first thread 28 so as to define the first stage 24 of the fastener as above mentioned. The thread 32 is disposed mid-way between the crests of the first thread 28 and has a constant pitch the same as that of the first thread 28. It will be seen that the thread 32 has a substantially constant diameter along its length and which diameter is substantially less than that of the first thread 28. It will thus be seen that the first stage 24 is defined by the conjoint extent of both threads 28 and 32 and the second stage 26 is defined by the remaining extent of the first thread 28 only.

The fastener 10 of the invention is designed to be rotatably driven into a bore 34 defined in a wall 36 of concrete or masonry to secure a fitting 38 to the wall. As the fastener enters the bore 34, the multi-diameter relationship of the threads 28 and 32 defining the first stage 24 stabilises and centres the fastener relative to the bore and ensures that the fastener will be received co-axially into the bore. As the fastener turns further into the bore, particulate is cut by the threads of the first stage and begins to collect between the threads. If this were permitted to continue, the particulate could jam between the threads and interfere with complete insertion into the bore. However, the relatively greater pitch of the thread in the second stage 26 serves as a reservoir or collecting area for the particulate being generated as insertion continues. Accordingly, the particulate is moved into this reservoir and does not hamper insertion of the fastener.

The notches 30 of the first thread 28 gradually chip and remove particulate from the bore permitting the thread to be firmly embedded into the bore. The gradually increasing diameter of the thread 28 also increases the holding power of the fastener as it is driven completely into the bore. For ultimate holding power there is a desirable relationship among the diameters D₁ and D₂ of the threads 28 and 32 respectively and the diameter D₃ of the hole 34, as shown in Figure 1. The diameter D₁ of the thread 28 permits it to cut into the concrete to establish the principal holding force. The thread 32 cuts into the concrete to a lesser extent as shown.

The relationship between the first and second stages can be viewed in the context of the relative pitch of the threads within each stage. In the first stage 24 the pitch P1 is established by the adjacent thread crests as shown in Figure 1. In the second stage 26, the pitch P2 is abut twice that of P1 due to the absence of an intermediate thread in the second stage.

By the foregoing it will be seen that the fastener of the invention is simple in design and easy to manufacture.

## Claims

1. A fastener (10) for tapping into an opening (34) defined in concrete or masonry, the fastener (10) including a shank (12) having a head (14) at one end and a point (16) at the other end, a first screw thread (30) of uniform pitch extending along the shank (12) from adjacent the point (16) towards the head (14), and a second screw thread (32) on the shank (12) from adjacent the point along only a portion of the full extent of the first screw thread (30), the second screw thread (32) being of a diameter less than that of the first screw thread (30), a first stage of the fastener including the second thread (32) enabling self-tapping of the fastener (10) into the opening (34) in the concrete, a second stage (26) of the fastener (10) where the second thread (32) is absent enabling particulate dislodged in the self-tapping process to be held and retained as the fastener is driven further into engagement with the opening (34).

2. A fastener according to claim 1, in which the shank (12) also includes an unthreaded portion (22) adjacent the head (14).

3. A fastener according to claim 1 or 2, wherein the second thread (32) extends along the shank (12) substantially one half of the length of the first thread (30).

4. A fastener according to any one of the preceding claims, wherein the shank (12) is of uniform diameter along substantially its entire length and wherein the first screw thread (30) has a diameter which increases from the point towards the head thereby increasing the holding power of the fastener (10).
